(19)

**Europäisches Patentamt**

**European Patent Office**

**Office européen des brevets**

(11) **EP 2 555 153 A1**

(12) **EUROPEAN PATENT APPLICATION**

(43) Date of publication:
**06.02.2013 Bulletin 2013/06**

(51) Int Cl.:
***G06Q 40/08*** *(2012.01)*

(21) Application number: **11195824.5**

(22) Date of filing: **27.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.08.2011 IN MU21952011**

(71) Applicant: **Tata Consultancy Services Limited Maharashtra (IN)**

(72) Inventors:
• **Nisal, Omkar**
  **560 066 WHITEFIELD (IN)**
• **Prasanna, Balachandran Gururaja**
  **560 066 Whitefield (IN)**

(74) Representative: **Regimbeau**
  **20, rue de Chazelles**
  **75847 Paris Cedex 17 (FR)**

(54) **Financial activity monitoring system**

(57)    The present subject matter discloses a system and a method for monitoring financial activities such as transactions performed by a customer. In one implementation, the method includes retrieving customer attributes pertaining to a customer and retrieving transaction attributes pertaining to at least one transactions performed by the customer. The method further includes monitoring the at least transactions based on at least one transaction monitoring rules retrieved from rules data and generating a normalized risk index, indicative of the risk exposure of a financial institution, for the at least one transaction.

Figure 1

**Description**

TECHNICAL FIELD

The present subject matter relates, in general, to computing systems and, in particular, to systems and methods for monitoring financial activities.

BACKGROUND

The laws and regulations of many jurisdictions mandate the monitoring of financial activities for detecting money laundering. Money laundering may be understood as a practice of hiding the source of illegally obtained money, for example, hiding of money generated from sources, such as criminal acts, drug dealing, corruption, accounting fraud, and tax evasion, so as to make the illegally obtained money appear to be legal. Often such illegally obtained money is used for criminal activities, such as terrorist attacks, funding criminal activities. Following the rise in criminal activities, governments and regulatory organizations have formulated strong and mandatory anti money laundering regulations.
Anti money laundering (AML), in the context of the finance and the legal industry, refers to the laws, regulations, and legal controls imposed on the financial institutions, making it mandatory to prevent and report suspected money laundering activities. Thus, anti money laundering regulations make it mandatory for a financial institution to monitor, investigate and report transactions of a suspicious nature to a financial regulatory of a jurisdiction in which the financial institution is conducting its business operations. In order to comply with the anti money laundering regulations, each business unit of the financial institution, such as credit/debit card unit, insurance unit, stocks/mutual fund unit, retail unit, and loans units, has its own measures or metrics to determine money laundering activities. Further, each business unit independently monitors transactions pertaining to a business unit to comply with anti money laundering regulations.

SUMMARY

This summary is provided to introduce concepts related to systems and methods for monitoring financial activities and the concepts are further described below in the detailed description. This summary is neither intended to identify essential features of the claimed subject matter nor is it intended for use in determining or limiting the scope of the claimed subject matter.
In one implementation, the method of monitoring financial activities includes retrieving customer attributes pertaining to a customer and retrieving transaction attributes pertaining to at least one transaction performed by the customer. The method further includes monitoring the at least one transaction based on at least one transaction monitoring rules retrieved from rules data and generating a normalized risk index, indicative of the risk exposure of a financial institution, for the at least transactions.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.
Fig. 1 illustrates a network implementation of a financial activity monitoring system, in accordance with an embodiment of the present subject matter.
Fig. 2 illustrates a method of monitoring financial activities for detecting suspected money laundering activities, in accordance with an implementation of the present subject matter.

DETAILED DESCRIPTION

Systems and methods for monitoring financial activities are described herein. The systems and methods can be implemented in a variety of computing systems. The computing systems that can implement the described method(s) include, but are not restricted to, mainframe computers, workstations, personal computers, desktop computers, minicomputers, servers, multiprocessor systems, laptops, mobile computing devices and the like.
Generally, various business units of a financial institution deploy a variety of software tools to determine money laundering activities and generate a risk index indicative of the risk factor associated with a transaction. Typically, anti money laundering practices adopted by the business units involve monitoring cash transactions, which involve transfer of cash exceeding a pre-defined threshold, comprehensive identification of other transactions which involve cross border transactions, movement of funds across multiple accounts or multiple products of the financial institution. The practices further include verification of the customers of the business units, checking up transactions against lists published by regulatory organizations, such as office of foreign assets control (OFAC) in the United States of America and the financial intelligence unit of the Reserve Bank in India; and validating transactions as well as historical transactions to detect money laundering typologies, if any, as against regulations published by financial action task force (FATF). Further, any suspicious pattern in a sequence of transactions is also ascertained. Accordingly, an alert may be raised and Suspicious Activity Reports (SARs) may be filed with regulators to safeguard financial institution's exposure, regulatory, constituents and competition risk.

Further, the monitoring of transactions or generating risk index associated with the financial institution as a single entity may be done manually, thereby making it a cumbersome task. In such cases, the compliance department of the financial institution has to manually compile anti money laundering reports from various business units to generate a consolidated report, which may be a tedious and time consuming job. Further, monitoring of transactions at each business unit involves deployment of multiple software tools, maintenance of multiple data repositories, etc. This increases costs involved in compliance with anti money laundering regulations. Moreover, maintenance of multiple databases involves various other complexities, such as checking data consistency, data integrity, and data synchronization.

The present subject matter describes systems and methods for monitoring transactions across various business units of a financial institution for compliance with anti money laundering regulations. In one implementation, the financial activity monitoring system, henceforth referred to as the FAM system, may be configured to generate one or more report (s) indicative of the risk associated with the financial institution by consolidating the risk indices associated with each business unit of the financial institution. The FAM system may also be configured to provide a holistic view of the risk exposure of the financial institution.

In one embodiment, the FAM system retrieves data pertaining to transactions associated with the various business units of the financial institution. It is understood that various types of transactions are performed by the customers of the financial institution. Further, the transactions performed by the customer may be pertaining to more than one business units. In said embodiment, the FAM system may be configured to classify the transactions into various categories, such as withdrawal or deposit of cash; wire transitions; purchase or sale of financial securities, stocks; transactions made using a debit/credit card; or transactions facilitated through net-banking or phone-banking. In said embodiment, the FAM system may be configured to associate various transaction attributes with each transaction category. Examples of the transaction attributes include, but are not limited to, transaction value, transaction volume indicative of the number of transactions conducted over a given time period, transaction velocity indicative of the cumulative transaction values within the given time period, and place of transaction.

Further, the FAM system may also be configured to store various personal and professional details of the customers, who would be performing these transactions, as customer attributes. The customer attributes include but are not limited to demographic and geographic information, type of customer, nationality of the customer, domicile of the customer and other personal details, which may be used to uniquely identify a customer. In one implementation, the FAM system may be configured to determine the risk of money laundering associated with a transaction based on at least one of customer attributes and transaction attributes.

It would be well understood by those skilled in the art, that the metrics, based on which a transaction or a series of transactions performed by a customer would be deemed as a suspected money laundering activity, can vary from one business unit to another business unit. The metrics may be understood to be pre-defined transaction monitoring rules based on one or more of the transaction category, transaction attribute, and customer attribute. Based on the pre-defined rules and metrics, the FAM system computes a risk index associated with the transactions of a customer. For example, if the value of transactions carried out by a customer exceeds a pre-defined threshold amount or if the number of foreign transactions, i.e., debit or credit of money in foreign nations, by a customer exceeds a pre-defined number, at least one transaction carried out by the customer may be deemed to be a suspected money laundering activity. The FAM system may be further configured to normalize risk indices of various business units so as to ascertain a holistic or final risk index associated with the financial institution. In said implementation, the FAM system may be configured to generate a consolidated report indicative of the anti money laundering risk exposure of the financial institutions across all the business units of the financial institution. Moreover, the FAM system may be further configured to compare the anti money laundering risk exposure of various business units based on the metrics. The FAM system may also be configured to notify a user of the FAM system of the business units on which the financial institution needs to strengthen the anti money laundering measures. The FAM system may be further configured to generate alerts based on the severity of the risk exposure such as high severity alert, medium alert, low severity alert, where the alert is indicative of a suspected money laundering activity.

In another implementation, the FAM system may be also be configured to analyze and track the status of the suspected money laundering activity such as "under investigation", and "awaiting additional details". The FAM system may also be configured to analyze details pertaining to historical transactions and ascertain the trend in risk exposure of a business unit or the financial institution as a whole at regular time intervals, such as daily, weekly, fortnightly, monthly, quarterly, and half-yearly.

Thus, the FAM system optimizes the monitoring financial activities for money laundering activities. The FAM system generates a consolidated report which presents a holistic view of the risk exposure to money laundering activities of the financial institution. While aspects of described systems and methods for monitoring financial activities can be implemented in any number of different computing systems, environments, and/or configurations, the embodiments are described in the context of the following exemplary system(s).

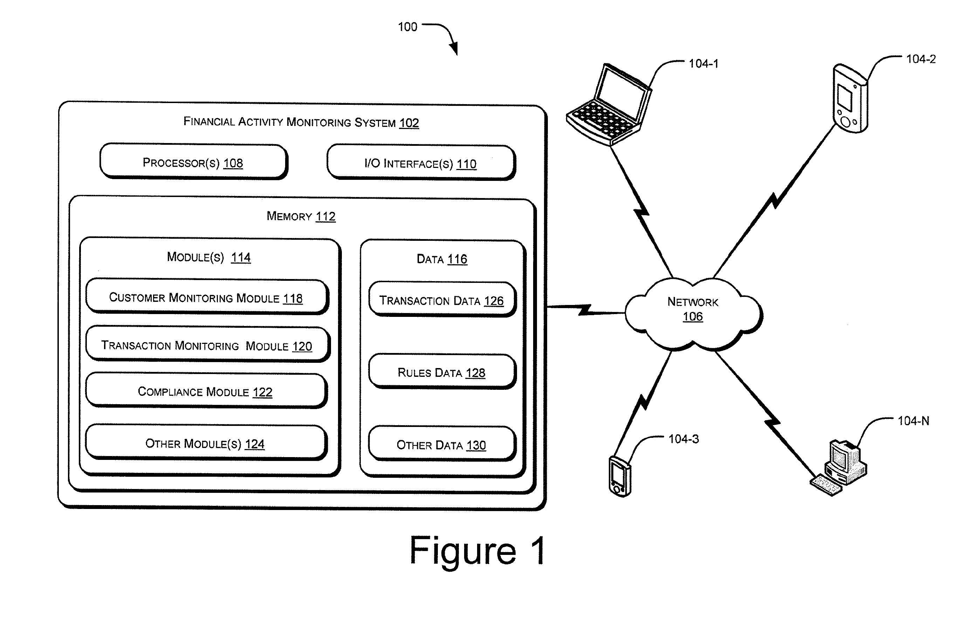

Fig. 1 illustrates a network environment 100 implementing a financial activity monitoring system 102, henceforth referred to as the FAM system 102, configured to monitor financial activities for money laundering activities, according to an embodiment of the present subject matter. The FAM system 102 may be configured to monitor financial activities of customers in a financial institution, for example a retail bank, an investment bank, a stock brokerage bank, an asset management firm, an insurance company, and a credit union. In one implementation, the FAM system 102 may be included within an existing information technology infrastructure of the financial institution. The FAM system 102 may be implemented in a variety of computing systems such as a laptop computer, a desktop computer, a notebook, a workstation, a mainframe computer, a server, a network server and the like. It will be understood that the FAM system 102 may be accessed by users, i.e., the executives of a compliance department of the financial institution, through one or more client devices 104 or applications residing on client devices 104. Examples of the client devices 104 include, but are not limited to, a portable computer 104-1, a personal digital assistant 104-2, a handheld device 104-3, and a workstation 104-N. As shown in the figure, such client devices 104 are communicatively coupled to the FAM system 102 through a network 106 for facilitating one or more customers, such as account holders, to access and operate their accounts.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further the network 106 may include a variety of network devices, including routers, bridges, servers, computing devices, storage devices, etc.

In one implementation, the FAM system 102 includes a processor(s) 108, interface(s) 110, and a memory 112 coupled to the processor(s) 108. The processor(s) 108 may be implemented as one or more microprocessors, microcomputers, microcontrollers, digital signal processors, central processing units, state machines, logic circuitries, and/or any devices that manipulate signals based on operational instructions. Among other capabilities, the processor(s) 108 are configured to fetch and execute computer-readable instructions stored in the memory 112.

The interface(s) 110 may include a variety of software and hardware interfaces, for example, a web interface, a graphical user interface, etc., allowing the FAM system 102 to interact with the client devices 104. Further, the interface (s) 110 may enable the FAM system 102 to communicate with other computing devices, such as web servers and external data servers (not shown in figure). The interface(s) 110 can facilitate multiple communications within a wide variety of networks and protocol types, including wired networks, for example LAN, cable, etc., and wireless networks such as WLAN, cellular, or satellite. The interface(s) 110 may include one or more ports for connecting a number of devices to each other or to another server.

The memory 112 can include any computer-readable medium known in the art including, for example, volatile memory (e.g., RAM), and/or non-volatile memory (e.g., EPROM, flash memory, etc.). In one embodiment, the memory 112 includes module(s) 114 and data 116. The modules 114 further include a customer monitoring module 118, a transaction monitoring module 120, a compliance module 122, and other module(s) 124. It will be appreciated that such modules may be represented as a single module or a combination of different modules. Additionally, the memory 112 further includes data 116 that serves, amongst other things, as a repository for storing data fetched processed, received and generated by one or more of the modules 114. The data 116 includes, for example, transaction data 126, rules data 128, and other data 130. In one embodiment, the transaction data 126, the rules data 128, and the other data 130, may be stored in the memory 112 in the form of data structures. Additionally, the aforementioned data can be organized using data models, such as relational or hierarchical data models.

In one implementation, the customer monitoring module 118 may retrieve various details pertaining to a customer of the financial institution from a customer data repository (not shown in the figures). The various customer details, henceforth referred to as the customer attributes, may include, for example, demographic and geographic information, nationality, domicile, place of birth, occupation and other data which may be used to uniquely identify the customer. The various customer details may also include data, indicative of a customer's identity, profile, past transactions, etc., collected during the customer identification, customer verification and customer acceptance process. For example, financial institutions may have a "know your customer" program, henceforth referred to as the KYC program, to verify the identity of prospective customers. The KYC program is a part of the due diligence and legal regulations that the financial institutions are mandated to follow so as to verify and confirm the identity of the customers. In certain jurisdictions, the KYC program mandates the financial institutions to ascertain information pertinent to transactions performed by the customer. The KYC program may also involve monitoring transactions of a customer against their recorded profile, history on the customers, etc. As mentioned earlier, the KYC program is a part of the due diligence that the financial institution has to adhere to. The obligations under due diligence may also extend to conducting an investigation of a customer, both individual and a legal entity, prior to conducting business with the customer.

In addition, certain jurisdictions may require the financial institution to conducted enhanced due diligence. Enhanced due diligence refers to a rigorous and robust process of investigation over and above the KYC program, that attempts to verify and validate the customer's identity; verify the customer's profile, business and account activity; identify relevant adverse information about the customer. Further the data collected during the due diligence and the enhanced due diligence process may also be included in the customer details.

In one implementation, a transaction server (not shown in figure), is configured to receive a request for a new transaction from a customer. In said implementation, on the receipt of a request for a new transaction by the transaction server, the transaction monitoring module 120 may be configured to retrieve various details pertaining to the transactions, henceforth referred to as transaction attributes, performed by the customer. The performed transaction may be grouped in any of the pre-defined transaction categories such as withdrawal or deposit of cash; wire transitions; purchase or sale of financial securities, stocks; transactions made using a debit/credit card; transactions facilitated through net-banking or phone-banking. Further the transaction monitoring module 120 may also retrieve various transaction attributes associated with the transactions performed by the customer. The transaction attributes may include various parameters associated with the transactions such as transaction value, transaction volume indicative of the number of transactions conducted over a time period, transaction velocity indicative of the cumulative transaction values within a time period, place of transaction. Further, the transaction attributes may also include other statistical parameters pertinent to transactions such as, ratio of credit to debit, ratio of purchase to sale, total number of alerts generated for a customer over a pre-defined time period, number of accounts opened or closed across various business units, and distribution of financial instrument used over a specified time period.

The compliance module 122 then retrieves various transaction monitoring rules from the rules data 128 to determine if a transaction or a series of transactions performed by a customer is a suspected money laundering activity. It may be appreciated by those skilled in the art that the series of transactions may be pertaining to a single or multiple business unit(s). The transaction monitoring rules are indicative of the transaction or the series of transactions to be a suspected money laundering activity, if the transaction attributes or the customer attributes associated with the transaction or the series of transactions have a pre-defined value or exceed a pre-defined value. For example a transaction rule might be a wire transfer exceeding ten million dollars to Nation A is a suspected money laundering activity. In one implementation, the compliance module 122 may assign a weightage parameter, indicative of the weightage, to one or more of customer details and transaction attributes so as to determine a risk index indicative of the probability of a transaction being a money laundering activity. In one implementation, the weightage parameter may be assigned based comparison of the current transaction and historical transactions performed by the customer by applying standardization rules. The standardization rules are defined to compute standard deviation increase, peak, maximum, and minimum values of the transaction attributes. The compliance module 122 may also determine the severity of the risk exposure of the financial institution based on the determined risk indices and classify the risk exposure into various categories such as low, medium, or high. If a transaction is determined to be a suspected money laundering activity, the compliance module 122 may update a flag and store various transaction attributes associated with the suspected transaction in the transactions data 126. The compliance module 122 also maintains the status of investigation of the suspected transaction, such as, pending, under investigation, closed, reported, and awaiting further details.

The compliance module 122 may be further configured to generate an alert if the risk index indicates a suspected money laundering activity. The compliance module 122 may also generate various reports depicting the risk exposure of various business units of a financial institution and a consolidated report which provides the compliance department of the financial institution a holistic view of the risk exposure of the financial institution. The compliance module 122 may be configured to generate the consolidated report in various types, such as, financial institution wide risk alerts, financial institution wide customer risk exposure, and financial institution wide severity of risk exposure.

Thus the FAM system 102 facilitates monitoring financial activities for detecting suspected money laundering activities and provides a holistic view of the risk exposure of the financial institution. Hence, the FAM system 102 facilitates the compliance department of the financial institution to conform to anti money laundering laws and regulations. The consolidated report generated by the FAM system 102 helps the executives or compliance analysts or the head of the compliance department to strengthen the business units of the financial institution to reduce the risks of money laundering.

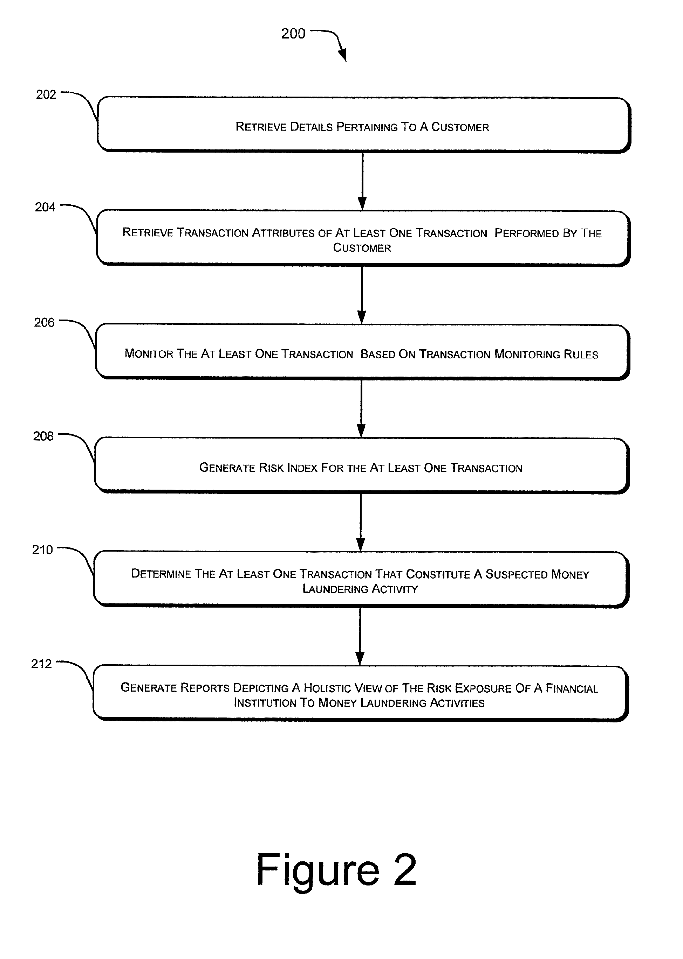

Fig. 2 illustrates a method 200 of monitoring financial activities for detecting suspected money laundering activities, in accordance with an implementation of the present subject matter. The exemplary method may be described in the general context of computer executable instructions. Generally, computer executable instructions can include routines, programs, objects, components, data structures, procedures, modules, functions, and the like that perform particular functions or implement particular abstract data types. The method may also be practiced in a distributed computing environment where functions are performed by remote processing devices that are linked through a communication network. In a distributed computing environment, computer executable instructions may be located in both local and remote computer storage media, including memory storage devices.

The order in which the method is described is not intended to be construed as a limitation, and any number of the described method blocks can be combined in any order to implement the method, or alternate methods. Additionally, individual blocks may be deleted from the method without departing from the spirit and scope of the subject matter described herein. Furthermore, the method can be implemented in any suitable hardware, software, firmware, or combination thereof. The method described herein is with reference to the FAM system 102 and in the context of monitoring financial activities for detecting suspected money laundering activities; however, the method can be implemented in other similar systems albeit and in other organizations with a few variations as will be understood by a person skilled in the art.

At block 202, various details pertaining to a customer are retrieved. In one implementation, the customer monitoring module 118 is configured to retrieve various details pertaining to the customer of the financial institution from a data repository maintained by the financial institution. The details of the customer may include data of the customer stored by the various business units, such as credit/ debit card department, savings bank account department, insurance department, mutual fund department, of the financial institution. The various customer details may also include data collected during the customer identification, customer verification, and customer acceptance process. During the customer identification, customer verification, and customer acceptance process various documents, such as proof of residence, proof of identity, proof of income, permanent account number (PAN) card, national identifier, tax identification number, driving license number and other such artifacts that establish identity, are collected by the financial institution to verify the details provided by the customer. The documents may also include references provided by existing customers of the financial institution, data available with other government approved agencies such as municipal corporations, department of income tax, law enforcement agencies. Further the data collected during the due diligence and the enhanced due diligence process may also be included in the customer attributes.

For example, a customer of the financial institution, say customer A, is being monitored to check for involvement in a money laundering activity. It would be appreciated by those skilled in the art that certain customer attributes pertaining to Customer A would be static and are henceforth referred to as the static customer attributes. The static customer attributes usually do not change with time or change once over a long period of time. Examples of such static customer attributes include date of birth, residential address, nationality, and occupation. Further, certain customer attributes pertaining to the Customer A would be dynamic, henceforth referred to as the customer attributes, which change frequently with time. Examples of such dynamic customer attributes include number of transactions performed by the customer, and value of transactions performed by the customers.

At block 204, one or more transaction attributes of the transaction, or a series of transactions performed by the customer are retrieved. In one implementation, the transaction monitoring module 120 is configured to retrieve various details pertaining to the transactions performed by the customer.

At block 206, transaction monitoring rules are applied to the transaction(s) to determine if the at least one transaction performed by the customer is a suspected money laundering activity. In one implementation, a weightage parameter is assigned to one or more of the various customer attributes and transaction attributes. Table 1 depicts a specimen of the risk score and the weightage parameters assigned to various customer details and transaction attributes.

Table -1

| Type of customer | Risk score | Weightage Parameter |
|---|---|---|
| Natural Person | 50 | |
| Legal Entity | 70 | |
| **Nationality** | **Risk score** | **Weightage Parameter** |
| Nation A | 50 | 10 |
| Nation B | 90 | 10 |
| Nation C | 90 | 10 |
| Nation D | 70 | 10 |
| **Transaction Category** | **Risk score** | **Weightage Parameter** |
| Cash Transaction | 10 | 50 |
| Debit Card Transactions | 05 | 40 |
| Wire Transactions | 50 | 60 |
| Purchase of stocks | 60 | 30 |

(continued)

| Type of customer | Risk score | Weightage Parameter |
|---|---|---|
| Sale of stocks | 70 | 30 |
| Credit Card Transactions | 95 | 70 |
| **Scenario / Typology** | **Risk score** | **Weightage Parameter** |
| High risk Geography Transactions | 90 | 70 |
| Structuring (Defined as the act of parceling a large financial transaction into a series of smaller transactions to avoid scrutiny by regulators or law enforcement organizations) | 50 | 80 |
| Purchase or Sale of stocks | 90 | 40 |
| Debit/ Credit Card Skimming (Theft of card information in an otherwise legitimate transaction) | 60 | 50 |

It should be understood that the details in the Table 1 are indicative and not an exhaustive list of assigned weightage parameters. Further based on the category of transaction, the same transaction attribute or the same customer attribute may be assigned different risk scores. For example the risk score assigned to the Nation A for cash transactions may be different from the risk score assigned to the Nation A for wire transfers. In one implementation, the compliance module 122 may be further configured to apply same or different transaction monitoring rules across various business units of the financial institution to determine if the at least one transaction carried out by the customer at any business unit by the customer. For example, if the at least one transaction is carried out by a customer of Nation A, a first risk score assigned would be 50. Further if the at least one transaction is carried out at a high risk geographical area; a second risk score assigned would be 90.

As shown in block 208 a risk index is generated for the at least one transaction carried out by the customer of the financial institution. The risk index is indicative of the risk exposure of the financial institution to money laundering activities due to the at least one transaction carried out by the customer. In one implementation, the compliance module 122 is configured to generate a normalized risk index based in part on the risk indices generated for every business unit. For example, the compliance module 122 may be configured to compute the weighted average of risk scores assigned to each of the transaction attributes and the customer attributes so as to determine the normalized risk index, for example in a range of 1 to 100. Further as an example, the evaluation of risk index is shown, in Table 2, for a customer A.

Table -2

| Transaction attribute/ Customer attribute | Risk Score | Weightage Parameter | Risk Index For Customer A |
|---|---|---|---|
| Type of customer | R1 | W1 | $R1 \times W1$ |
| Nationality | R2 | W2 | $R2 \times W2$ |
| Cash Transaction | R3 | W3 | $R3 \times W3$ |
| Debit Card Transactions | R4 | W4 | $R4 \times W4$ |
| Wire Transactions | R5 | W5 | $R5 \times W5$ |
| Purchase of stocks | R6 | W6 | $R6 \times W6$ |
| Sale of stocks | R7 | W7 | $R7 \times W7$ |
| Credit Card Transactions | R8 | W8 | $R8 \times W8$ |
| High risk Geography Transactions | R9 | W9 | $R9 \times W9$ |
| Structuring | R10 | W10 | $R10 \times W10$ |
| Purchase or Sale of stocks | R11 | W11 | $R11 \times W11$ |
| Debit/Credit Card Skimming | R12 | W12 | $R12 \times W12$ |

Further, in the above example, in one implementation, the compliance module 122 is configured to compute the normalized risk index for the Customer A using equation 1:

$$NRI = \frac{\sum_{i=0}^{i=N} RiXWi}{\sum_{i=0}^{i=n} Wi} \quad \dots\dots\dots\dots(Eq.1)$$

where NRI represents the normalized risk index for the Customer A and N represents the total number of transaction attributes and customer attributes considered for generating the normalized risk index of the Customer A.

As shown in block 210, the at least one transaction conducted by the customer that constitute a suspected money laundering activity are determined. Further, the severity of the risk of the at least one transaction being a money laundering activity is also determined. In one example, the compliance module 122 may be configured to categorize the risk of the at least one transaction being a money laundering activity as low if the normalized risk index is between 1 to 50, as medium if the normalized risk index is between 51 to 75, and as high if the normalized risk index is between 76 to 100. It should be understood that the risk indices may also be generated for all the transactions or a part of the transactions performed by the customer so as to detect structuring. The structuring may be understood as an act of parceling a large financial transaction into a series of smaller transactions to avoid scrutiny by regulatory or law enforcement organizations. Moreover, in one implementation, the severity of the risk of the at least one transaction being a money laundering activity may be based on other parameters such as status of due diligence, such as KYC program.

In said implementation, the attributes, both transactions attributes and customer attributes, of the at least one transaction are compared against the criteria for generating a high risk alert. If the conditions for generating a high risk alert are met, the compliance module 122 is configured to generate the same; else the attributes are compared with the criteria for generating a medium risk alert and so on. In another implementation, the compliance module 122 may be configured to generate alerts as per the details illustrated in Table 3.

Table -3

| Normalized Risk Index | Severity of Risk |
| --- | --- |
| 1-30 | Very Low |
| 31-50 | Low |
| 51-75 | Medium |
| 76-80 | High |
| 81-100 | Very High |

As illustrated in block 212 various reports are generated so as to give the compliance department a holistic view of the risk exposure of the financial institution. In one implementation, the compliance module 122 is configured to generate various reports to indicate the risk exposure of the financial institution based on business units, customers, geographic locations, transaction category, etc. For example, a first report may be indicative of the business units which have a high number of high risk customers, a second type of report may be indicative of the type of transactions which for a substantial portion of the suspected money laundering activities and so on. Further, the compliance module 122 may be configured to generate the reports at regular time intervals.

Although embodiments for detecting money laundering activities have been described in language specific to structural features and/or methods, it is to be understood that the invention is not necessarily limited to the specific features or methods described. Rather, the specific features and methods are disclosed as exemplary embodiments for methods and systems for monitoring financial activities so as to detect money laundering activities.

## Claims

1. A computer implemented method for monitoring transactions in a communication network, for detecting and alerting possible money laundering activities, the method comprising:

obtaining, in response to receipt of a request for a transaction by a transaction server, at least one transaction attribute , wherein the transaction attribute is associated with at least one transaction performed by a customer; retrieving, from a customer data repository, at least one customer attribute pertaining to the customer of a financial institution; analyzing the at least one transaction based in part on a transaction monitoring rule integrating the at least one transaction attribute and the at least one customer attribute; and

detecting an incidence indicative of a possible money laundering activity based on the analyzing.

2. The computer implemented method as claimed in claim 1, wherein the method further comprises generating a normalized risk index, indicative of whether the at least one transaction is a money laundering activity, based on the analyzing.

3. The computer implemented method as claimed in claim 1, wherein the method further comprises generating a consolidated report depicting a holistic view of the risk exposure of the financial institution based on the at least one transaction monitoring rule.

4. The computer implemented method as claimed in claim 1, wherein the method further comprises updating a flag on determining the at least one transaction to be a suspected money laundering activity based on at least one transaction monitoring rule.

5. The computer implemented method as claimed in claim 3, wherein the consolidated report is generated based in part on, the at least one transaction performed by the customer of the financial institution, geographic location of the at least one transaction, and a transaction category of the category of at least one transaction.

6. The computer implemented method as claimed in claim 1, wherein the generating of the normalized risk index comprises computing a weighted average of a plurality of risk indices generated for at least one transaction pertaining to the customer.

7. A financial activity monitoring (FAM) system (102) comprising:

   a processor (108); and
   a memory (114) coupled to the processor (108), the memory (114) comprising a compliance module (122) configured to,
   generate a risk index, indicative of risk exposure of a financial institution, for at least one transaction performed by a customer, wherein the risk index is generated based on transaction monitoring rules;
   determine whether the at least one transaction performed by the customer is a suspected money laundering activity based on transaction monitoring rules; and
   generate a consolidated report depicting a holistic view of the risk exposure of the financial institution, based on normalization of the generated risk index.

8. The FAM system (102) as claimed in claim 7 wherein the risk index is generated based on a risk score associated with at least one of a transaction attribute and a customer attribute.

9. The FAM system (102) as claimed in claim 8, wherein the compliance module (122) is further configured to assign a weightage parameter to the at least one of the transaction attribute and the customer attribute for generating the risk index.

10. The FAM system (102) as claimed in claim 7, wherein the compliance module (122) is further configured to generate at least one report indicative of the risk exposure of the financial institution based in part on, the at least one transaction performed by the customer of the financial institution, geographic location of the at least one transaction, and a transaction category of the category of at least one transaction.

11. The FAM system (102) as claimed in claim 7, wherein the FAM system (102) further comprises a customer monitoring module (118) configured to retrieve at least one customer attribute associated with the customer of the financial institution.

12. The FAM system (102) as claimed in claim 7, wherein the FAM system (102) further comprises a transaction monitoring module (120) configured to retrieve at least one transaction attribute associated with the at least one transaction performed by the customer of the financial institution.

13. The FAM system (102) as claimed in claim 12, wherein the transaction attribute comprises at least one of a transaction value, a transaction volume a transaction velocity, and a place of transaction.

14. A computer-readable medium having embodied thereon a computer program for executing a method comprising:

obtaining, in response to receipt of a request for a transaction by a transaction server, at least one transaction attribute , wherein the transaction attribute is associated with at least one transaction performed by a customer;

retrieving, from a customer data repository, at least one customer attribute pertaining to the customer of a financial institution;

analyzing the at least one transaction based in part on a transaction monitoring rule integrating the at least one transaction attribute and the at least one customer attribute; and

detecting an incidence indicative of possible money laundering activity based on the analyzing.

Figure 1

FINANCIAL ACTIVITY MONITORING SYSTEM 102

PROCESSOR(S) 108

I/O INTERFACE(S) 110

MEMORY 112

MODULE(S) 114

CUSTOMER MONITORING MODULE 118

TRANSACTION MONITORING MODULE 120

COMPLIANCE MODULE 122

OTHER MODULE(S) 124

DATA 116

TRANSACTION DATA 126

RULES DATA 128

OTHER DATA 130

104-1

104-2

104-3

104-N

NETWORK 106

200

202

RETRIEVE DETAILS PERTAINING TO A CUSTOMER

204

RETRIEVE TRANSACTION ATTRIBUTES OF AT LEAST ONE TRANSACTION PERFORMED BY THE CUSTOMER

206

MONITOR THE AT LEAST ONE TRANSACTION BASED ON TRANSACTION MONITORING RULES

208

GENERATE RISK INDEX FOR THE AT LEAST ONE TRANSACTION

210

DETERMINE THE AT LEAST ONE TRANSACTION THAT CONSTITUTE A SUSPECTED MONEY LAUNDERING ACTIVITY

212

GENERATE REPORTS DEPICTING A HOLISTIC VIEW OF THE RISK EXPOSURE OF A FINANCIAL INSTITUTION TO MONEY LAUNDERING ACTIVITIES

# Figure 2

**EP 2 555 153 A1**

Europäisches Patentamt

European Patent Office

Office européen des brevets

# EUROPEAN SEARCH REPORT

Application Number

EP 11 19 5824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-14 | INV. G06Q40/08 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 1 October 2012 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 19 5824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | - - - - - | | |

TECHNICAL FIELDS
SEARCHED    (IPC)

The present search report has been drawn up for all claims

| Place of search | Date of completion of the search | Examiner |
|---|---|---|
| The Hague | 1 October 2012 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)